Europäisches Patentamt

European Patent Office

Office européen des brevets

(11) Veröffentlichungsnummer : **0 097 237**
**B1**

(12) # EUROPÄISCHE PATENTSCHRIFT

(45) Veröffentlichungstag der Patentschrift :
20.08.86

(21) Anmeldenummer : 83104457.3

(22) Anmeldetag : 06.05.83

(51) Int. Cl.⁴ : **H 02 P 3/04, H 01 F 7/18**

(54) **Schaltungsanordnung zur Unterbrechung des Freilaufstromes für Lüftmagneten von Bremsmotoren.**

(30) Priorität : 22.06.82 DE 3223260

(43) Veröffentlichungstag der Anmeldung :
04.01.84 Patentblatt 84/01

(45) Bekanntmachung des Hinweises auf die Patenterteilung : 20.08.86 Patentblatt 86/34

(84) Benannte Vertragsstaaten :
**AT BE CH FR GB IT LI LU NL SE**

(56) Entgegenhaltungen :
DE-A- 2 452 676
DE-B- 1 613 027
US-A- 3 614 565

(73) Patentinhaber : **Eberhard Bauer Electromotorenfabrik
GmbH
Eberhard-Bauer-Strasse 36-59
D-7300 Esslingen (DE)**

(72) Erfinder : **Gabriel, Rupprecht
Lindenstrasse 82
D-7302 Ostfildern 2 (DE)**

(74) Vertreter : **Rüger, Rudolf, Dr.-Ing. et al
Webergasse 3 Postfach 348
D-7300 Esslingen/Neckar (DE)**

## Beschreibung

Die Erfindung geht aus von einer Schaltungsanordnung zur Unterbrechung des Freilaufstromes bei aus einem Wechselspannungsnetz mit Gleichstrom gespeisten Lüftmagneten von Bremsmotoren, mit einem an das Wechselspannungsnetz angeschlossenen Gleichrichter, an dessen Ausgangsklemmen über einen durch einen Varistor geshunteten Schalter der Lüftmagnet liegt und mit wenigstens einer Freilaufdiode für den Lüftmagneten, wobei der Schalter in dem über die Freilaufdiode führenden Freilaufstromkreis des Lüftmagneten liegt.

Aus der Praxis ist eine derartige Schaltung bekannt, bei der jedoch der Schalter zu einem Schütz gehört, mit dem die Netzspannung für den Bremsmotor ein- bzw. ausgeschaltet wird. Der Gleichrichter ist hierbei eingangsseitig mit zwei Motorklemmen verbunden, so daß bei eingeschaltetem Schütz nicht nur der Motor, sondern auch der Lüftmagnet über den Gleichrichter und den zusätzlichen Schalterkontakt in dem Schütz mit Strom versorgt wird.

Beim Öffnen des Schützes wird der Motorstrom abgeschaltet und es wird über den zusätzlichen Schalter auch der durch die Freilaufdiode fließende Freilaufstrom des Lüftmagneten unterbrochen, um so ein möglichst schnelles Entregen des Lüftmagneten zu erreichen.

Diese in der Praxis sehr bewährte Schaltung erfordert jedoch einen Motorschütz mit einem zusätzlichen Schalterkontakt für den Lüftmagneten und demzufolge zwei zusätzliche Verbindungsleitungen von dem Schütz zu der Schaltungsanordnung für den Bremsmagneten.

Eine weitere Anordnung, um ein verhältnismäßig schnelles Abfallen des Lüftmagneten eines Bremsmotors zu erreichen, ist aus der US-PS-3 614 565 bekannt. Diese Anordnung sieht vor, den Lüftmagnet zunächst während etwa einer Sekunde nach dem Einschalten des Motorstroms mit einer großen Spannung und damit einem entsprechend großen Strom zu beaufschlagen und anschließend den Strom durch den Lüftmagneten mittels einer Steuerschaltung bis auf einen sehr kleinen Haltewert zu reduzieren. Der nunmehr sehr viel kleinere Haltestrom und der dementsprechend kleinere Freilaufstrom kann durch verhältnismäßig kleine und ungeschützte elektromechanische Kontakte ausgeschaltet werden.

Wenn jedoch der Motor, bspw. bei Hebezeugen und dergl., noch innerhalb der ersten Sekunde nach dem Start wieder gestoppt werden muß, scheidet diese bekannte Anordnung aus, weil dann ein sehr viel höherer Freilaufstrom ausgeschaltet werden müßte, der verhältnismäßig kleine Kontakte innerhalb sehr kurzer Zeit zerstört.

Darüber hinaus zeigt die bekannte Anordnung eine statistische Streuung des Abschaltzeitpunktes des Freilaufstromes, weil der Freilaufstrom über ein Relais gesteuert wird, dessen Magnetwicklung aus der Motorwechselspannung gespeist wird. Der genaue Abschaltzeitpunkt des Freilaufstromes ist deshalb davon abhängig, wo mehr oder weniger zufällig innerhalb der Periode des speisenden Wechselstroms die Stromversorgung für den Motor und damit das den Freilaufstrom steuernde Relais ausgeschaltet wird. Erfolgt das Abschalten des Motorstroms in der Nähe des Maximums, so bleibt das Relais deutlich länger angezogen als es beim Abschalten in der Nähe des Stromnulldurchgangs der Fall ist. Für Anwendungen, bei denen es auch darauf ankommt, den Motor innerhalb enger Toleranzen immer an derselben Stelle anzuhalten, scheidet deswegen die bekannte Anordnung aus. Hieran würde auch nichts der Ersatz des Relais durch einen elektronischen Schalter ändern, weil für die einfache Ansteuerung des elektronischen Schalters eine Siebkette erforderlich ist, die an ihrem Ausgang ein ähnliches Schaltverhalten zeigt wie das Relais, oder bei der sehr lange Verzögerungszeiten in Kauf genommen werden müssen.

Ausgehend von diesem Stand der Technik besteht die Aufgabe der Erfindung darin, eine schnell ansprechende Schaltungsanordnung zur Unterbrechung des Freilaufstromes für einen Lüftmagneten zu schaffen, die lediglich an zwei Anschlußklemmen des Bremsmotors angeschlossen zu werden braucht und ohne zusätzliche Steuerleitung das Auslangen findet, wobei der Freilaufstrom auch dann unterbrochen wird, wenn die Eingangsklemmen des Gleichrichters kurzgeschlossen sind und deren Ansprechzeit vom Abschaltzeitpunkt innerhalb der Wechselspannungsperiode im wesentlichen unabhängig ist.

Zur Lösung dieser Aufgabe ist die erfindungsgemäße Schaltungsanordnung durch die Merkmale des Hauptanspruches gekennzeichnet.

Diese Schaltungsanordnung hat den Vorzug, daß sie ohne weiteres in dem Klemmenkasten des Bremsmotors untergebracht werden kann und sich selber steuert, abhängig davon, ob der Strom für den Motor eingeschaltet ist oder nicht.

Eine verhältnismäßig kleine und sehr zuverlässig arbeitende Schaltungsanordnung wird erhalten, wenn der Halbleiterschalter zum Schalten des Stromes für den Bremsmagneten ein selbstsperrender MOS-Feldeffekttransistor ist, bei dem im Gegensatz zu bipolaren Transistoren nicht die Gefahr des Second-Breakdown besteht.

Der zu dem Halbleiterschalter parallel liegende Varistor (VDR-Widerstand) kann in seiner Verlustleistung kleiner dimensioniert werden, wenn zu ihm ein Widerstand parallel liegt.

Je nach dem, wie schnell die Erregung des Lüftmagneten erfolgen soll, kann der Gleichrichter entweder als Einweggleichrichter ausgeführt sein oder er kann als Brückengleichrichter ausgeführt sein, wobei dann zwei Dioden des Brückengleichrichters als Freilaufdioden für den Lüftmagneten arbeiten und während der Stromflußpause von dem Gleichrichter in den Lüftmagneten den Freilaufstrom übernehmen.

Die Ansprechgeschwindigkeit kann erhöht werden, wenn die Steuerschaltung durch die positive und die negative Halbwelle der Netzwechselspannung getriggert wird und in dem getriggerten Zustand eine Ausgangsspannung abgibt, die den Halbleiterschalter durchsteuert. Hierbei kann die Steuerschaltung so dimensioniert sein, daß die Steuerschaltung beim Ausbleiben der Halbwellen der Netzwechselspannung nach einer vorbestimmten Zeit eine Ausgangsspannung abgibt, die den Halbleiterschalter in den gesperrten Zustand überführt. Die Verzögerungszeit, nach der der Halbleiterschalter in den gesperrten Zustand überführt wird, kann in der Größenordnung von 100 µsec liegen.

Die Steuerschaltung wird in ihrem Aufbau sehr einfach, wenn sie ein Zeitglied enthält, das durch die Halbwellen der Netzwechselspannung jeweils zurückgesetzt wird. Hierzu kann die Steuerschaltung einen eingangsseitig über einen Vorwiderstand an das Netz angeschlossenen Optokoppler mit zwei antiparallel geschalteten Leuchtdioden enthalten, an dessen Ausgang ein Speicher angeschlossen ist, so daß auf einfache Weise beide Halbwellen der Netzwechselspannung gemessen werden können. Im einfachsten Fall ist hierbei der zeitbestimmende Speicher ein RC-Glied, dessen Kondensator parallel zu dem Ausgang des Optokopplers liegt und über den zugehörigen Widerstand aus einer Spannungsquelle aufladbar ist.

Um definierte Ausgangssignale zu bekommen, ist es zweckmäßig, an das Zeitglied einen Impulsformer anzuschließen, der entsprechend dem Zustand des Zeitgliedes ein erstes oder ein zweites Signal abgibt. Der Impulsformer kann hierbei von einem Schmitt-Trigger gebildet sein, der den Vorteil aufweist, daß das Ausgangssignal keine Zwischenzustände einnehmen kann. Ein solcher Schmitt-Trigger läßt sich vorteilhafterweise mittels zweier hintereinander geschalteter Inverter aufbauen, die von dem Ausgang des zweiten Inverters auf den Eingang des ersten Inverters über einen Widerstand zurückgekoppelt sind.

Falls die Leistung des Impulsformers nicht ausreicht, um unmittelbar den Halbleiterschalter zu aktivieren, liegt zweckmäßigerweise zwischen dem Ausgang des Impulsformers und dem Steuereingang des Halbleiterschalters ein Pufferverstärker. Der Pufferverstärker kann durch mehrere eingangs- und ausgangsseitig parallel geschaltete integrierte Verstärker gebildet sein.

Falls der Bremsmotor nach dem Abschalten der Netzspannung eine zu große EMK abgibt, die zu einem verzögerten Ansprechen der Schaltungsanordnung führen könnte, ist es vorteilhaft, wenn gemäß weiterer Erfindung zusätzlich zum Abschalten des Motorstromes die beiden Anschlußklemmen des Bremsmotors über einen Schalter miteinander kurzgeschlossen werden, an denen die erfindungsgemäße Schaltungsanordnung angeschlossen ist.

In der Zeichnung ist ein Ausführungsbeispiel des Gegenstandes der Erfindung dargestellt. Es zeigen:

Figur 1 eine Schaltungsanordnung gemäß der Erfindung zur Unterbrechung des Freilaufstromes des Lüftmagneten eines Bremsmotors in einem Blockschaltbild und

Figur 2 das Schaltbild der Steuerschaltung für die Schaltungsanordnung nach Fig. 1.

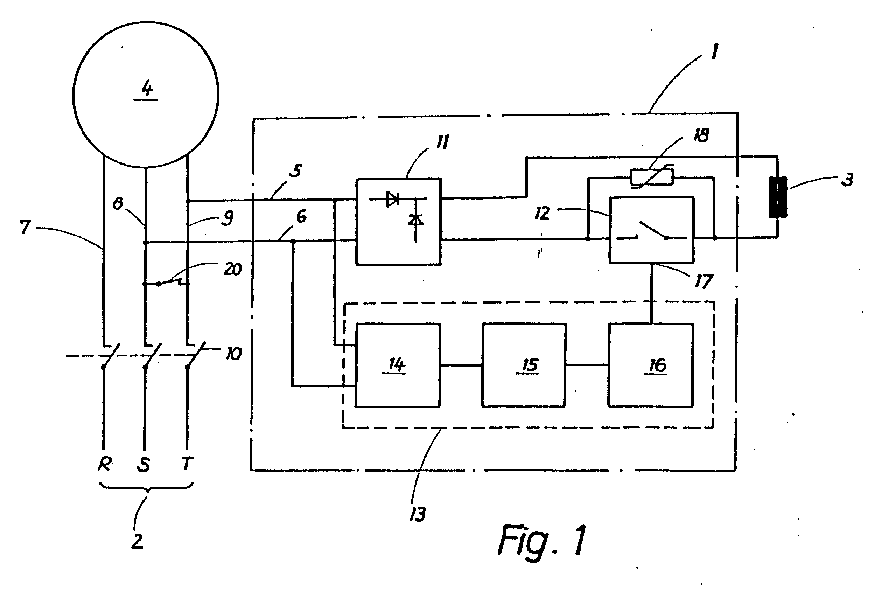

In Fig. 1 ist eine Schaltungsanordnung 1 zur Unterbrechung des Freilaufstromes eines aus einem Wechselspannungsnetz 2 mit Gleichstrom gespeisten Lüftmagneten 3 eines Bremsmotors 4 veranschaulicht, die mit ihren Eingangsleitungen 5, 6 an zwei Anschlußklemmen des beispielsweise dreiphasigen Asynchronmotors 4, nämlich S und T, angeschlossen ist. Die Anschlußklemmen 7, 8 und 9 des Bremsmotors 4 sind mit einem dreipoligen Motorschütz 10 verbunden, über den der Bremsmotor 4 wahlweise an die spannungsführenden Phasen R, S und T des Wechselspannungsnetzes 2 anschließbar ist.

Die Schaltungsanordnung 1 zur Unterbrechung des Freilaufstromes enthält einen an den Eingangsleitungen 5, 6 liegenden Gleichrichter 11, an dessen Ausgang über einen gesteuerten Halbleiterschalter 12 der Lüftmagnet 3 für die Bremse des Bremsmotors 4 angeschlossen ist. Je nach dem, ob der Gleichrichter 11 ein Einweggleichrichter oder ein Brückengleichrichter ist, enthält er zusätzlich eine Freilaufdiode für den Lüftmagnet 3, die einen Spannungsanstieg an den Anschlüssen des Lüftmagneten 3 verhindert, wenn der Strom durch den Gleichrichter 11 während der jeweils gesperrten Halbwelle null wird. Falls der Gleichrichter 11 ein Brückengleichrichter ist, so wird der Freilaufstromkreis über zwei Dioden der Gleichrichterbrücke geschlossen, was keiner weiteren Erläuterung bedarf.

An die Eingangsleitungen 5, 6 der Schaltungsanordnung 1 ist eine Steuerschaltung 13 angeschlossen, die ein Zeitglied 14, einen damit verbundenen Impulsformer 15 sowie einen durch den Impulsformer 15 gespeisten Pufferverstärker 16 enthält, dessen Ausgang an dem Steuereingang 17 des gesteuerten Halbleiterschalters 12 liegt.

Um beim Abschalten des Stromes durch den Lüftmagnet 3 mit Hilfe des gesteuerten Halbleiterschalters 12 Spannungsspitzen an diesem zu vermeiden, ist der gesteuerte Halbleiterschalter 12 durch einen Varistor 18 (VDR-Widerstand) überbrückt.

Die insoweit beschriebene Schaltung arbeitet folgendermaßen: Sobald der Strom für den Bremsmotor 4 über den Schütz 10 eingeschaltet wird, gelangt die Netzspannung an den Anschlußklemmen 8, 9 des Bremsmotors 4 auch in die Eingangsleitungen 5, 6 der Schaltungsanordnung 1, was dazu führt, daß die Steuerschaltung 13 in den Steuereingang 17 des gesteuerten Halbleiterschalters 12 ein Signal einspeist, durch das dieser eingeschaltet wird, womit nunmehr der Lüftmagnet 3 mit einem Gleichstrom aus dem Gleichrichter 11 beaufschlagt und die Bremse des Bremsmotors 14 gelüftet wird. Durch jede Halbwelle der Netzwechselspannung wird das Zeitglied 14 getriggert, so daß das Ausgangssignal an dem Ausgang der Steuerschaltung 13, die im übrigen die Charakteristik eines retriggerbaren Monoflops aufweist, erhalten bleibt.

Sobald der Schütz 10 geöffnet wird und damit der Bremsmotor 4 von dem Netz 2 getrennt wird, verschwindet auch die Wechselspannung an den Eingangsleitungen 5, 6, wodurch das Nachtriggern des Zeitgliedes 14 entfällt, das nunmehr in einen anderen Zustand übergeht. Das hierbei entstehende Signal wird durch den Impulsformer 15 umgeformt und durch den Pufferverstärker 16 verstärkt und bildet ein weiteres Ausgangssignal der Steuerschaltung 13, das nunmehr einen solchen Wert aufweist, daß der gesteuerte Halbleiterschalter 12 in den gesperrten Zustand überführt wird, wodurch ein möglicher Freilaufstrom des Lüftmagneten 3 auf einen durch den Varistor 18 begrenzten Wert verringert wird. Diese Verringerung des Freilaufstromes durch den Lüftmagneten 3 führt zu einem entsprechend schnellen Ansprechen der Bremse des Bremsmotors 4.

Falls der Bremsmotor 4 nach dem Abschalten der Netzspannung über eine verhältnismäßig lange Zeit eine unerwünschte große EMK an den Anschlußklemmen 8, 9 erzeugt, kann zu dem Eingang des Gleichrichters 11 bzw. zu den Eingangsleitungen 5, 6 ein Schalter 20 parallel geschaltet sein, der zweckmäßigerweise mit dem Schütz 10 gekuppelt ist und beim Öffnen des Schützes 10 die Leitungen 8, 9 miteinander kurzschließt, so daß augenblicklich die Spannung an den Eingangsleitungen 5, 6 verschwindet.

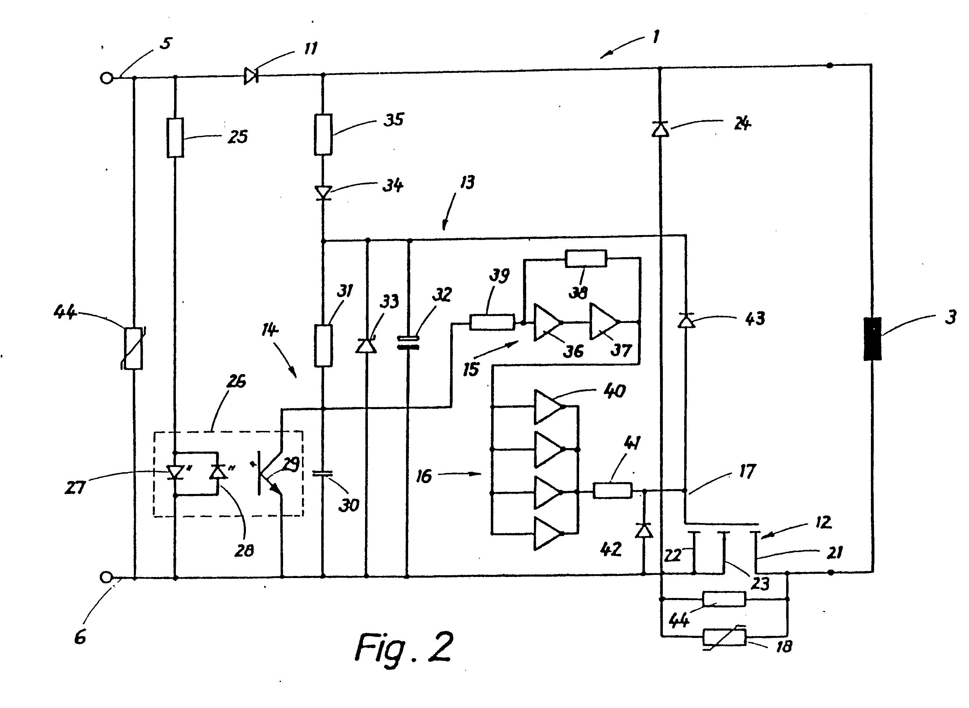

In Fig. 2 ist die in Figur 1 in Blockschaltbildern veranschaulichte Schaltungsanordnung 1 im einzelnen dargestellt, wobei die entsprechenden Schaltungsgruppen mit denselben Bezugszeichen versehen sind.

Die Eingangsleitung 5 liegt an der Anode einer als Einweggleichrichter arbeitenden Diode 11, deren Kathode mit einem Anschluß des Lüftmagneten 3 verbunden ist, dessen anderer Anschluß mit dem gesteuerten Halbleiterschalter 12 verbunden ist. Der gesteuerte Halbleiterschalter 12 ist durch einen selbstsperrenden MOS-Fet gebildet, dessen Drainanschluß 21 mit dem Lüftmagneten 3 verbunden ist, während der Sourceanschluß 22 ebenso wie die Substratelektrode 23 zu der Eingangsleitung 6 führen. Von der Sourceelektrode 22 führt eine Freilaufdiode 24 zu der Kathode der Diode 11. Sobald der MOS-Fet 12 durchgesteuert ist, fließt damit während der positiven Halbwelle ein Strom von der Eingangsleitung 5 über die Diode 11 durch den Lüftmagneten 3 sowie den MOS-Fet 12 zurück zu der Eingangsleitung 6. Während der negativen Halbwelle hingegen ist die Diode 11 gesperrt und es fließt ein Freilaufstrom aus dem Lüftmagneten 3 durch den MOS-Fet 12 und die Freilaufdiode 24 zurück in den Lüftmagneten 3.

Das Zeitglied 14 der Steuerschaltung 13 enthält einen eingangsseitig an die Eingangsleitungen 5 und 6 über einen Vorwiderstand 25 angeschlossenen Optokoppler 26 mit zwei antiparallel geschalteten Leuchtdioden 27, 28. Ausgangsseitig enthält der Optokoppler 26 einen Fototransistor 29 und liegt parallel zu einem Kondensator 30 eines aus dem Kondensator 30 und einem Widerstand 31 gebildeten RC-Gliedes ; der Kondensator 30 des RC-Gliedes 31, 30 wird aus einer durch einen Kondensator 32 und eine parallelgeschaltete Z-Diode 33 gebildeten Spannungsquelle geladen, wobei der Kondensator 32 seinerseits über eine in Durchlaßrichtung geschaltete Diode 34 sowie einen Vorwiderstand 35 aus der an dem Lüftmagneten 3 anliegenden Spannung geladen wird.

Die Spannung an dem Kondensator 32 wird dabei durch die Z-Diode 33 begrenzt.

Die Eingangsleitung 6 der Schaltungsanordnung 1 bildet die Schaltungsmasse für die Steuerschaltung 13, mit der der Emitter des Optokopplers 26 ebenso verbunden ist wie das kalte Ende des Kondensators 30, die Anode der Z-Diode 33 und das kalte Ende des Kondensators 32.

Die an dem Kondensator 30 anstehende Spannung gelangt in den von einem Schmitt-Trigger gebildeten Impulsformer 15. Der Schmitt-Trigger besteht aus zwei hintereinandergeschalteten Invertern 36, 37 und ist von dem Ausgang des Inverters 37 über einen Widerstand 38 zu dem Eingang des Inverters 36 rückgekoppelt, wobei zur Verbesserung der Rückkopplung dem Eingang des Inverters 36 noch ein Widerstand 39 vorgeschaltet ist. Die Arbeitsweise eines solchen Schmitt-Triggers ist bekannt und braucht deswegen nicht weiter beschrieben zu werden.

Wie bereits erläutert, liegt an dem Ausgang des Impulsformers 15 der Eingang des Pufferverstärkers 16, der, wie dargestellt, von mehreren, insgesamt vier parallelgeschalteten Invertern 40 gebildet ist, die vorzugsweise gemeinsam mit den Invertern 36 und 37 des Impulsformers 15 als integrierte MOS-Schaltkreise ausgeführt sind. Das Ausgangssignal des Pufferverstärkers 16 gelangt über einen Widerstand 41 zu dem Gate 17 des MOS-Fet 12.

Die noch an das Gate 17 angeschlossenen Dioden 42 und 43 dienen als Überspannungsschutz und sollen gefährliche Spannungen von dem Gate 17 des MOS-Fet 12 fernhalten, wozu die Diode 42 mit ihrer Anode unmittelbar mit der Sourceelektrode verbunden ist, während die Anode der Diode 43 an der Anode der Z-Diode 33 liegt.

Der zwischen die Eingangsleitungen 5 und 6 geschaltete Varistor 44 stellt ebenfalls einen Überspannungsschutz für die Schaltungsanordnung 1 dar, hat aber im übrigen keinen Einfluß auf deren Funktion.

Sobald an den Eingangsleitungen 5 und 6 eine Netzspannung anliegt, weil der Schütz 10 eingeschaltet wird, liegt auch an den Invertern 36, 37 und 40 die erforderliche Versorgungsspannung an, die von der Eingangsleitung 5, beispielsweise über nicht veranschaulichte Vorwiderstände abgeleitet wird. Da in diesem Zeitpunkt der Kondensator 30 noch entladen ist, ist auch die Ausgangsspannung des daran angeschlossenen nicht invertierenden Impulsformers 15 null oder nahezu null ; dies führt dazu, daß die Ausgangsspannung des Pufferverstärkers 16 ihren Maximalwert annimmt, wodurch der selbstsperrende MOS-Fet 12 an seinem Gate 17 durchgesteuert wird und den Strom durch den Lüftmagneten 3 einschaltet, der damit die Bremse des Bremsmotors 4 löst.

Die durch das Einschalten der Netzspannung hinter dem Gleichrichter 11 anstehende Gleichspannung führt über den Widerstand 35 und die Diode 34 zu einem Aufladen des Kondensators 32 auf einen durch die Z-Diode 33 begrenzten Wert, so daß nunmehr auch über den Widerstand 31 der Kondensator 30 des Zeitgliedes 14 geladen werden kann. Solange jedoch zwischen den Eingangsleitungen 5 und 6 eine Netzwechselspannung anliegt, leuchten, je nach dem Vorzeichen der Halbwelle, eine der beiden Leuchtdioden 27 oder 28 auf und steuern den Fototransistor 29 durch. Da der Fototransistor 29 parallel zu dem Kondensator 30 liegt, wird der Kondensator 30 periodisch entladen, so daß bei geeigneter Dimensionierung des Vorwiderstandes 31 und des Kondensators 30 die an dem Kondensator auftretende Maximalspannung kleiner bleibt als die Umschaltspannung des Schmitt-Triggers des Impulsformers 15.

Wird jedoch die Netzspannung für den Bremsmotor 4 abgeschaltet, so daß an den Eingangsleitungen 5, 6 keine Wechselspannung mehr ansteht, bleiben auch die Leuchtdioden 27 und 28 dunkel und damit der Fototransistor 29 gesperrt. Der Kondensator 30 lädt sich nunmehr über den Widerstand 31 aus dem als Speicherkondensator dienenden Kondensator 32 auf, dessen Entladung im übrigen über die Diode 34 verhindert wird. Hierbei erreicht die Spannung an dem Kondensator 30 nach einer vorbestimmten Zeit entsprechend der Zeitkonstanten des RC-Gliedes 31, 30 einen Wert, der über der Umschaltspannung des Schmitt-Triggers des Impulsformers 15 liegt, wodurch letzterer umgeschaltet wird und an seinem Ausgang die Maximalspannung abgibt. Die maximale Spannung am Ausgang des Impulsformers 15 bedingt ihrerseits, daß die Spannung an dem Ausgang des Pufferverstärkers 16 nahezu auf null zurückgeht, wodurch der MOS-Fet 12 in den gesperrten Zustand überführt wird ; damit ist der über die Freilaufdiode 24 fließende Freilaufstrom auf einem durch den Varistor 18 begrenzten Wert verringert und der Lüftmagnet 3 läßt die Bremse entsprechend schnell einfallen.

Zur Verringerung der Verlustleistung des Varistors 18 kann diesem noch ein zusätzlicher Widerstand 44 parallel geschaltet sein, der beim Abschalten des Freilaufstromes durch die Diode 24 einen Teil des Freilaufstromes übernimmt.

Ein verzögertes Wirksamwerden des Zeitgliedes 14 aufgrund der von dem Bremsmotor 4 erzeugten EMK unmittelbar nach dem Abschalten des Netzes 2 kann durch den Schalter 20, wie oben beschrieben, an dem Eingang des Gleichrichters 11 unterdrückt werden.

## Patentansprüche

1. Schaltungsanordnung zur Unterbrechung des Freilaufstromes bei aus einem Wechselspannungsnetz mit Gleichstrom gespeisten Lüftmagneten (3) von Bremsmotoren, mit einem an das Wechselspannungsnetz (2) angeschlossenen Gleichrichter (11), an dessen Ausgangsklemmen über einen durch einen Varistor (18) geshunteten Schalter (12) der Lüftmagnet liegt, und mit wenigstens einer Freilaufdiode (24) für den Lüftmagneten (3), wobei der Schalter (12) in dem über die Freilaufdiode führenden Freilaufstromkreis des Lüftmagneten (3) liegt, dadurch gekennzeichnet, daß eine mit den Eingangsklemmen (5, 6) des Gleichrichters (11) verbundene Steuerschaltung (13) vorhanden ist, deren Ausgang an einem Steuereingang (17) des als gesteuerten Halbleiterschalters (12) ausgebildeten Schalters liegt und die den Halbleiterschalter (12) bei vorhandener Netzwechselspannung einschaltet und bei Verschwinden der Netzwechselspannung abschaltet, und daß die Steuerschaltung (13) die Charakteristik eines retriggerbaren Monoflops aufweist.

2. Schaltungsanordnung nach Anspruch 1, dadurch gekennzeichnet, daß der Halbleiterschalter (12) ein selbstsperrender MOS-Feldeffekttransistor ist.

3. Schaltungsanordnung nach Anspruch 1, dadurch gekennzeichnet, daß zu dem Varistor (18) ein Widerstand (44) parallel liegt.

4. Schaltungsanordnung nach Anspruch 1, dadurch gekennzeichnet, daß der Gleichrichter (11) ein Einweggleichrichter ist.

5. Schaltungsanordnung nach Anspruch 1, dadurch gekennzeichnet, daß der Gleichrichter (11) ein Brückengleichrichter ist, dessen Dioden als Freilaufdioden arbeiten.

6. Schaltungsanordnung nach Anspruch 1, dadurch gekennzeichnet, daß die Steuerschaltung (13) jeweils durch die positive und/oder die negative Halbwelle der Netzwechselspannung getriggert wird und im getriggerten Zustand eine Ausgangsspannung abgibt, die den Halbleiterschalter (12) durchsteuert.

7. Schaltungsanordnung nach den Ansprüchen 1 oder 6, dadurch gekennzeichnet, daß die Steuerschaltung (13) beim Ausbleiben der Halbwellen der Netzwechselspannung nach einer vorbestimmten Zeit eine Ausgangsspannung abgibt, die den Halbleiterschalter (12) in den gesperrten Zustand überführt.

8. Schaltungsanordnung nach Anspruch 1, dadurch gekennzeichnet, daß die Steuerschaltung (13) ein Zeitglied (14) enthält, das durch die Halbwellen der Netzwechselspannung zurückgesetzt wird.

9. Schaltungsanordnung nach Anspruch 8, dadurch gekennzeichnet, daß die Steuerschaltung (13) einen eingangsseitig über einen Vorwiderstand (25) an das Netz angeschlossenen Optokoppler (26) mit zwei antiparallel geschalteten Leuchtdioden (27, 28) enthält, an dessen Ausgang ein zeitbestimmender Speicher (31, 30) angeschlossen ist.

10. Schaltungsanordnung nach Anspruch 9, dadurch gekennzeichnet, daß der zeitbestimmende Speicher ein RC-Glied (31, 30) ist, dessen Kondensator (30) parallel zu dem Ausgang des Optokopplers (26) liegt und über den zugehörigen Widerstand (31) aus einer Spannungsquelle (32, 33) aufladbar ist.

11. Schaltungsanordnung nach Anspruch 8, dadurch gekennzeichnet, daß an das Zeitglied (14) ein Impulsformer (15) angeschlossen ist, der entsprechend dem Zustand des Zeitgliedes (14) ein erstes oder ein zweites Signal abgibt.

12. Schaltungsanordnung nach Anspruch 11, dadurch gekennzeichnet, daß der Impulsformer (15) ein Schmitt-Trigger ist.

13. Schaltungsanordnung nach Anspruch 12, dadurch gekennzeichnet, daß der Schmitt-Trigger von zwei hintereinandergeschalteten Invertern (36, 37) gebildet ist, die von dem Ausgang des zweiten Inverters (37) auf den Eingang des ersten Inverters (36) über einen Widerstand (38) rückgekoppelt sind.

14. Schaltungsanordnung nach Anspruch 12, dadurch gekennzeichnet, daß an dem Ausgang des Impulsformers (15) ein Pufferverstärker (16) liegt, der ausgangsseitig mit dem Steuereingang (17) des Halbleiterschalters (12) verbunden ist.

15. Schaltungsanordnung nach Anspruch 14, dadurch gekennzeichnet, daß der Pufferverstärker (16) durch mehrere eingangs- und ausgangsseitig parallelgeschaltete integrierte Inverter (40) gebildet ist.

16. Schaltungsanordnung nach Anspruch 1, dadurch gekennzeichnet, daß zwischen den Eingängen des Gleichrichters (11) ein Schalter (20) angeschlossen ist, der beim Abschalten des Stromes für den Bremsmotor (4) geschlossen wird.

**Claims**

1. Circuit arrangement for the interruption of the freewheeling current in release magnets (3) of braked motors, the magnets being fed with direct current from an alternating current supply (2), a rectifier (11) being connected to the alternating current supply (2), the output terminals of the rectifier being connected to the release magnet through a switch (12) shunted by a varistor (18), there being at least one freewheeling diode (24) for the release magnet (3), the switch (12) being included in the freewheeling circuit of the release magnet (3), which circuit includes the freewheeling diode, the arrangement being characterised in that a control circuit (13) is connected to the input terminals (5, 6) of the rectifier (11) and an output of the control circuit is connected to a control input (17) of the switch (12), which is formed as a controlled semi-conductor switch, the control circuit (13) being effective to close the semi-conductor switch (12) when the supply alternating voltage is present and to open the switch (12) on disappearance of the supply alternating voltage, and in that the control circuit (13) possesses the characteristic of a retriggerable monoflop.

2. Circuit arrangement according to Claim 1, characterised in that the semi-conductor switch (12) is an enhancement type MOS field-effect transistor.

3. Circuit arrangement according to Claim 1, characterised in that a resistor (44) lies in parallel with the varistor (18).

4. Circuit arrangement according to Claim 1, characterised in that the rectifier (11) is a one-way rectifier.

5. Circuit arrangement according to Claim 1, characterised in that the rectifier (11) is a bridge rectifier the diodes of which serve as freewheeling diodes.

6. Circuit arrangement according to Claim 1, characterised in that the control circuit (13) is triggered in each case by the positive and/or the negative half-wave of the supply alternating current and in the triggered condition delivers an output voltage which renders the semi-conductor switch (12) transmissive.

7. Circuit arrangement according to Claim 1 or 6, characterised in that the control circuit (13), in the absence of the half waves of the supply alternating current, after a pre-determined time delivers an output voltage which brings the semi-conductor switch (12) into the blocked condition.

8. Circuit arrangement according to Claim 1, characterised in that the control circuit (13) contains a timing means (14) which is set back by the half waves of the alternating current supply.

9. Circuit arrangement according to Claim 8, characterised in that the control circuit (13) contains an optocoupler (26) connected on the input side of the control circuit through a series resistor (25) to the supply, with two anti-parallel connected light-emitting diodes (27, 28), to the output of which a time-determining store (31, 30) is connected.

10. Circuit arrangement according to Claim 9, characterised in that the time-determining store is an RC member (31, 30) the capacitor (30) of which is in parallel to the output of the optocoupler (26) and is chargeable through the associated resistor (31) from a voltage source (32, 33).

11. Circuit arrangement according to Claim 8, characterised in that to the time member (14) there is connected a pulse former (15) which delivers a first or a second signal according to the condition of the time member (14).

12. Circuit arrangement according to Claim 11, characterised in that the pulse former (15) is a Schmitt trigger.

13. Circuit arrangement according to Claim 12, characterised in that the Schmitt trigger is formed by two series-connected inverters (36, 37) which are back-coupled from the output of the second inverter (37) to the input of the first inverter (36) through a resistor (38).

14. Circuit arrangement according to Claim 12, characterised in that on the output of the pulse former (15) there lies a buffer amplifier (16) which is connected on the output side with the control input (17) of the semi-conductor switch (12).

15. Circuit arrangement according to Claim 14, characterised in that the buffer amplifier (16) is formed by a plurality of integrated inverters (40) parallel-connected on the input and output sides.

16. Circuit arrangement according to Claim 1, characterised in that a switch (20) is connected between the inputs of the rectifer (11), which switch is closed on a termination of current supply to the braked motor (4).

## Revendications

1. Montage pour l'interruption du courant de roue libre dans des aimants (3) alimentés en courant continu à partir d'un réseau de tension alternative (2) et servant au desserrage de moto-freins, comprenant un redresseur (11) qui est raccordé au réseau de tension alternative (2) et aux bornes de sortie duquel l'aimant de desserrage est relié par l'intermédiaire d'un interrupteur (12) court-circuité par un varistor (18), et au moins une diode de roue libre (24) pour l'aimant (3), l'interrupteur (12) étant monté dans le circuit de courant de roue libre, passant par la diode de roue libre, de l'aimant de desserrage (3), caractérisé par le fait que sur les bornes d'entrée (5, 6) du redresseur (11) est branché un circuit de commande (13) dont la sortie est appliquée à une entrée de commande (17) de l'interrupteur réalisé sous la forme d'un interrupteur à semi-conducteurs (12) commandé et qui met en circuit l'interrupteur (12) en cas de tension alternative présente dans le réseau et hors circuit en cas de disparition de la tension alternative du réseau, et que le circuit de commande (13) présente la caractéristique d'une bascule monostable redéclenchable.

2. Montage selon la revendication 1, caractérisé par le fait que l'interrupteur à semi-conducteurs (12) est un transistor MOS à effet de champ à autoblocage.

3. Montage selon la revendication 1, caractérisé par le fait qu'une résistance (44) est montée parallèlement au varistor (18).

4. Montage selon la revendication 1, caractérisé par le fait que le redresseur (11) est un redresseur à demi-onde.

5. Montage selon la revendication 1, caractérisé par le fait que le redresseur (11) est un redresseur à pont dont les diodes fonctionnent en tant que diodes de roue libre.

6. Montage selon la revendication 1, caractérisé par le fait que le circuit de commande (13) est à chaque fois déclenché par la demi-onde positive et/ou la demi-onde négative de la tension alternative du réseau, et, à l'état déclenché, délivre une tension de sortie qui rend passant l'interrupteur à semi-conducteurs (12).

7. Montage selon les revendications 1 ou 6, caractérisé par le fait que le circuit de commande (13) en cas d'absence des demi-ondes de la tension alternative du réseau délivre, après un temps prédéterminé, une tension de sortie qui fait passer l'interrupteur à semi-conducteurs (12) à l'état bloqué.

8. Montage selon la revendication 1, caractérisé par le fait que le circuit de commande (13) comprend un relais de temporisation (14) qui est remis à zéro par les demi-ondes de la tension alternative du réseau.

9. Montage selon la revendication 8, caractérisé par le fait que le circuit de commande (13) comprend un optocoupleur (26) connecté au réseau, côté entrée, par une résistance série (25), comportant deux diodes luminescentes (27, 28) montées tête-bêche et à la sortie duquel est reliée une mémoire (31, 30) déterminant le temps.

10. Montage selon la revendication 9, caractérisé par le fait que la mémoire déterminant le temps est un organe à circuit RC (31, 30) dont le condensateur (30) est monté parallèlement à la sortie de l'optocoupleur (26) et peut être chargé par l'intermédiaire de la résistance correspondante (31) à partir d'une source de tension (32, 33).

11. Montage selon la revendication 8, caractérisé par le fait qu'au relais de temporisation (14) est raccordé un formeur d'impulsions (15) qui, selon l'état du relais de temporisation (14), délivre un premier ou un second signal.

12. Montage selon la revendication 11, caractérisé par le fait que le formeur d'impulsion (15) est une bascule de Schmitt.

13. Montage selon la revendication 12, caractérisé par le fait que la bascule de Schmitt est formée par deux inverseurs (36, 37) qui sont montés l'un derrière l'autre et qui, par la sortie du second inverseur (37), sont montés en contre réaction avec l'entrée du premier inverseur (36) par l'intermédiaire d'une résistance (38).

14. Montage selon la revendication 12, caractérisé par le fait qu'à la sortie du formeur d'impulsions (15) est monté un amplificateur tampon (16) qui, côté sortie, est raccordé à l'entrée de commande (17) de l'interrupteur à semi-conducteurs (12).

15. Montage selon la revendication 14, caractérisé par le fait que l'amplificateur tampon (16) est formé par plusieurs inverseurs intégrés (40) montés en parallèle côté entrée et côté sortie.

16. Montage selon la revendication 1, caractérisé par le fait qu'entre les entrées du redresseur (11) est raccordé un interrupteur (20) qui est fermé lors de la coupure du courant pour le moto-frein (4).

Fig. 1

0 097 237

Fig. 2

0 097 237